# EUROPÄISCHE PATENTSCHRIFT

(11) **EP 1 792 801 B1**
(45) Veröffentlichungstag und Bekanntmachung des Hinweises auf die Patenterteilung: **20.01.2010**
(21) Anmeldenummer: 06125097.3
(22) Anmeldetag: 30.11.2006
(51) Int. Cl.: B61D 23/02, B60R 3/02, A61G 3/06

(54) **Schienenfahrzeug mit einem Schiebetritt und Schiebetrittkassette**
Rail vehicle with a sliding footstep and casing containing said footstep
Véhicule ferroviaire avec un marchepied coulissant et boîtier pour ce marchepied

(30) Priorität: 02.12.2005 DE 102005057901
(43) Veröffentlichungstag der Anmeldung: 06.06.2007
(73) Patentinhaber: SIEMENS AKTIENGESELLSCHAFT, 80333 München (DE)
(72) Erfinder: Brückler, Ewald, 8055 Graz (AT); Gerstmeier, Theodor, 86609 Donauwörth (DE)

(56) Entgegenhaltungen:
- WO-A-98/06370
- WO-A-2005/030551
- WO-A1-01/83279
- DE-A1- 19 503 079
- US-A- 3 910 201

## Beschreibung

Die Erfindung bezieht sich auf ein Schienenfahrzeug mit wenigstens einem Einstiegsbereich, der hinsichtlich seiner Rohbaukonstruktion zur Aufnahme eines in einer Schiebetrittkassette angeordneten und geführten Schiebetritts im Fahrzeugbodenrand ausgebildet ist.

Ein solches Schienenfahrzeug ist beispielsweise aus der WO 98/06370 A1 bekannt, wobei der Schiebetritt im Wesentlichen horizontal ausgefahren wird.

Ebenfalls zum Stand der Technik gehört der Offenbarungsgehalt der WO 2005/030551 A1, dem ein Schiebetritt entnehmbar ist, der in einer eingefahrenen Stellung schräg angeordnet ist und dessen Schiebekurve in Richtung auf einen Bahnsteig zunächst schräg nach oben und daran anschließend schräg nach unten verläuft.

Ein Schienfahrzeug der eingangs genannten Art ist beispielsweise auch in Form des Schienenfahrzeugstyps AVANTO der Fa. Siemens AG bekannt. Dieser Fahrzeugtyp ist mit einem Schiebetritt versehen, der in einer Aluminium-Kassette angeordnet ist. In der Kassette befindet sich ein sog. Trockenraum mit einer Motor-Getriebe-Kombination und einer Trittsteuerung. Ein Ausschub der Schiebetrittkassette besteht aus einer stabilen Tragrahmen-Schweißkonstruktion, in die ein Gitterrost integriert ist.

Wegen der räumlichen Enge im Einstiegsbereich werden Führungsprofilschienen für den Schiebetritt durch einen Langträger des Schienenfahrzeugs hindurchgeführt, um eine entsprechende Stützweite für eine vorgeschriebene Tragfähigkeit zu erreichen.

Die Aluminium-Kassette besteht aus einer Grundplatte und einem Rahmen aus Stangenpressprofilen, die gleichzeitig als Deckelauflage dienen.

Bei einem solchen Schienenfahrzeug hat die Auslegung der Schiebetrittkassette die Eigenschaft, dass der Schiebetritt im Wesentlichen in Richtung der Kassettenebene ausfahrbar ist.

Ausgehend hiervon liegt der Erfindung die Aufgabe zugrunde, ein Schienenfahrzeug und eine Schiebetrittkassette anzugeben, bei denen der Schiebetritt vorhandenen Raumverhältnissen zwischen Bahnsteigkante und Fußbodenhöhe eines Schienenfahrzeugs im Einstiegsbereich Rechnung tragen kann.

Diese Aufgabe wird bei dem eingangs genannten Schienenfahrzeug dadurch gelöst, dass der Schiebetritt derart geführt ist, dass er beim Ausfahren aus der Schiebetrittkassette eine parabelförmige Bewegung aus der Kassettenebene heraus nach unten ausführt, und der Schiebetritt über zwei in der Schiebetrittkassette in parabelförmige Führungen eingreifende, parabelförmige Arme ausfahrbar gelagert ist.

In dieser Weise wird gewährleistet, dass der Schiebetritt dazu verwendet werden kann, ggf. vorhandene Höhenunterschiede zwischen Fahrzeugboden und Bahnsteig auszugleichen oder auch vorgegebenen Ausgangslagen der Schiebetrittkassette im Schienenfahrzeug, die durch eine etwaige Neigung des Fahrzeugsbodens im Einstiegsbereich gegeben sind, Rechnung zu tragen. Als besonderes Beispiel ist in diesem Zusammenhang der Fahrzeugtyp "Doppelstockwagen" zu nennen, bei dem häufig der Fahrzeugboden von Fahrzeugmitte aus in Richtung auf einen Einstiegsbereich ansteigt. Dadurch, dass eine parabelförmige Bewegung des Schiebetritts aus der Kassettenebene nach unten ermöglicht werden kann, kann der Schiebetritt derart ausgefahren werden, dass er in gewünschter Art und Weise den Spalt zwischen dem Fahrzeug und einer Bahnsteigkante überbrückt.

Vorteilhafter Weise ist eine Ausfahrsteuerung für den Schiebetritt vorgesehen, die derart ausgelegt ist, dass er zwei Endlagen anfahren kann. Beispielsweise könnte die erste, weiter einwärts gelegene Endlage dazu verwendet werden, etwaige größere Abstände zwischen Fahrzeug und Bahnsteigkante zu überbrücken, während eine zweite, weiter außen gelegene Endlage eine Anlage der Vorderkante des Schiebetritts an der Bahnsteigkante nach sich ziehen würde.

Ein Antrieb des Schiebetritts kann über eine Spindel erfolgen.

Für den bereits oben genannten Anwendungsbereich der Erfindung im Zusammenhang mit Doppelstockwagen kann die Schiebetrittkassette in dem Einstiegsbereich schräg gelagert sein, wobei deren äußeres Ende höher als deren inneres Ende liegt.

Für eine günstige Kraftleitung im Bereich von Langträgerprofilen des Wagenkastenuntergestells ist es bevorzugt, dass die Schiebetrittkassette auf einem dickwandigen Stahlprofil abgestützt ist, das zu beiden Seiten des Einstiegsbereichs über Stahlgussteile an Langträgerprofilen eines Wagenkastenuntergestells angebracht ist.

Dabei kann das dickwandige Stahlprofil in seiner Höhe gegenüber dem vergleichsweise dünnwandigeren Langträgerprofil derart vermindert sein, dass eine Oberfläche der Schiebetrittkassette im Wesentlichen mit einer Fußbodenoberkante abschließt. Insofern ergibt sich eine gewünschte Integration der Schiebetrittkassette in den Fahrzeugboden.

Der Schiebetritt kann von einem begehbaren Wartungsdeckel, der die Schiebetrittkassette oben verschließt, bedeckt sein und ist außerdem frei von über ihm angeordneten festen und tragenden Wagenkastenrohbauteilen. Letzteres wird durch die besondere Gestaltung des Eingangsbereiches im Hinblick auf den Einsatz des dickwandigen Stahlprofils erreicht, das über die Stahlgussteile an die Langträgerprofile angeschlossen ist.

Zur weiteren Verstärkung des Einstiegsbereichs kann ein Verstärkungsgerippe vorgesehen sein, das von dem dickwandigen Stahlprofil aus horizontal nach innen verläuft und am Wagenkastenuntergestell angebracht ist.

Die oben genannte Aufgabe wird hinsichtlich der Schiebetrittkassette durch die Merkmale des Anspruchs 9 gelöst.

Ausführungsbeispiele der Erfindung werden nachfolgend unter Bezugnahme auf die Zeichnung noch näher erläutert. Es zeigen:
- Figur 1: eine perspektivische Ansicht eines Einstiegsbereichs eines Schienenfahrzeugs mit integrierter Schiebetrittkassette und
- Figur 2: eine Querschnittsansicht eines Fahrzeugbodens im Einstiegsbereich eines Schienenfahrzeugs in Kombination mit einem Bahnsteig.

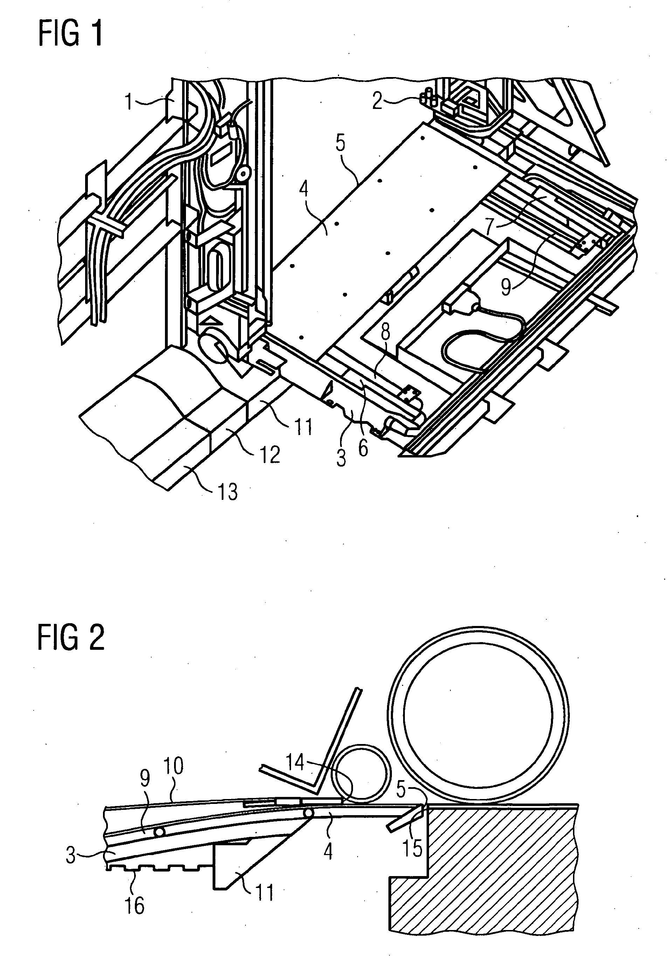

Figur 1 zeigt den Einstiegsbereich eines Doppelstockwagens als Beispiel eines Schienenfahrzeugs. Im Einzelnen sind zwei Türsäulen 1, 2 des Einstiegsbereichs dargestellt, zwischen denen, in einen Fahrzeugboden integriert, eine Schiebetrittkassette 3 angeordnet ist, in der ein Schiebetritt 4 ausfahrbar gelagert ist. Der Schiebetritt 4 wird von einer Spindel (nicht dargestellt) angetrieben, die wiederum über eine Ausfahrsteuerung betrieben wird. Die Ausfahrsteuerung ist derart ausgelegt, dass der Schiebetritt eine innere und eine äußere Endlage anfahren kann. Dabei dient die Einnahme der inneren Endlage dazu, beispielsweise einen erhöhten Abstand zwischen dem Schienenfahrzeug und einer Bahnsteigkante wenigstens teilweise zu überbrücken. Die äußere Endlage ist dafür gedacht, dass beispielsweise Rollstuhlfahrer (in Fig. 2 stilisiert dargestellter Rollstuhl) problemlos in den Einstiegsbereich hinein und aus ihm heraus gelangen können. Insofern liegt eine Vorderkante 5 des Schiebetritts 4 im letzteren Anwendungsfall knapp vor einer Bahnsteigkante (vgl. Fig. 2).

Der Schiebetritt 4 ist über zwei parabelförmige Arme 6, 7 in entsprechend parabelförmigen Führungsschienen 8, 9 gelagert, die sich in Ausfahrrichtung des Schiebetritts 4 innerhalb der Schiebetrittkassette 3 erstrecken. Die Arme 6, 7 können beispielsweise mit Laufrollen ausgestattet sein, die eine Verfahrbarkeit des Schiebetritts 4 in den Führungsschienen 8, 9 gestatten.

Die Schiebetrittkassette 3 ist mit einem in der Figur 1 aus Übersichtlichkeitsgründen nicht dargestellten Wartungsdeckel 10 versehen, der begehbar ist. Im ausgefahrenen Zustand des Schiebetritts 4, wie in Figur 2 zu sehen, schließt der Schiebetritt 4 unter Ausbildung einer gering dimensionierten Stufe an den Wartungsdeckel 10 an.

Die Schiebetrittkassette 3 ist auf einem dickwandigen Stahlprofil 11 eines Wagenkastenuntergestells abgestützt, das zu beiden Seiten über Stahlgussteile 12 an den typischer Weise als Seitenträger des Wagenkastenuntergestells eingesetzten Langträgerprofilen 13 angeschlossen ist. Die dickwandige Ausführung des Stahlprofils 11 unterhalb eines Vorderbereichs der Schiebetrittkassette 3 sorgt dafür, dass eine für den Einstiegsbereich geeignete Belastbarkeit des Wagenkastenuntergestells gewährleistet wird. Die Stahlgussteile 12 ermöglichen einen Anschluss des in der Höhe verminderten dickwandigen Stahlprofils 11, gegenüber dem Langträgerprofil 13. Der Höhenunterschied ist dabei so bemessen, dass die Schiebetrittkassette 3, insbesondere ihr begehbarer Wartungsdeckel 10 mit einer Fußbodenoberkante des Schienenfahrzeugwagens abschließt, so dass eine durchgehende Lauffläche geschaffen wird.

Aus Figur 2 geht deutlich hervor, dass, wie gerade im Bereich der Doppelstockwagen häufig anzutreffen, die Schiebetrittkassette 3 schräg auf dem Wagenkastenuntergestell gelagert ist, wobei ein äußeres Ende höher als ein inneres Ende der Schiebetrittkassette 3 liegt.

Die in Figur 2 im Querschnitt gezeigte Führungsschiene 9 hat keinen geraden Verlauf sondern ist im Wesentlichen parabelförmig ausgebildet. Dies hat zur Folge, dass der Schiebetritt 4 beim Ausfahren aus der Schiebetrittkassette 2 eine im Wesentlichen parabelförmige Bewegung aus der Kassettenebene nach unten ausführt. Da die Kassettenebene schräg ausgerichtet ist, gestattet das parabelförmige Ausfahren des Schiebetritts 4 eine Anlage der Vorderkante 5 unmittelbar an der Bahnsteigkante 15, auch wenn eine Einstiegskante 14 des Eintrittsbereichs ebenfalls etwa in Höhe der Bahnsteigkante 15 liegt.

Die Anordnung der Schiebetrittkassette 3 mit Schiebetritt 4 im Einstiegsbereich, insbesondere die gewählte Unterkonstruktion mit dem dickwandigen Stahlprofil 11, gewährleistet, dass die Schiebetrittkassette 3 in einfacher Weise ein- und ausgebaut werden kann, denn über dem Schiebetritt 4 sind keine festen und tragenden Wagenkastenrohbauteile anzuordnen. Die Schiebetrittkassette 3 kann dadurch von oben oder seitlich in am Wagen angeordnete Aufnahmepunkte eingeschoben und verschraubt werden. Eine Einstiegtrittleiste sowie die typischer Weise großflächige Wartungsklappe 10 sind ebenfalls rasch mittels Schraubverbindung am Wagen zu montieren bzw. zu demontieren. Außerdem wird ein montage- und wartungsfreundlicher Zugang zu der Schiebetrittkassette 3 und ihren Komponenten ermöglicht. Zur weiteren Verstärkung des Einstiegsbereichs dient ein horizontal verlaufendes Verstärkungsgerippe 16, das unterhalb der Schiebeschrittkassette 3 an dem dickwandigen Stahlprofil 11 und ggf. an anderer Stelle der Wagenkastenunterkonstruktion befestigt ist.

## Patentansprüche

1. Schienenfahrzeug mit wenigstens einem Einstiegsbereich, der hinsichtlich seiner Rohbaukonstruktion zur Aufnahme eines in einer Schiebetrittkassette (3) angeordneten und geführten Schiebetritts (4) im Fahrzeugbodenrand ausgebildet ist,
**dadurch gekennzeichnet,**
**dass** der Schiebetritt (4) derart geführt ist, dass er beim Ausfahren aus der Schiebetrittkassette (3) eine parabelförmige Bewegung aus der Kassettenebene heraus nach unten ausführt, und der Schiebetritt (4) über zwei in der Schiebetrittkassette (3) in parabelförmige Führungen (8, 9) eingreifende, parabelförmige Arme (6, 7) ausfahrbar gelagert ist.

2. Schienenfahrzeug nach Anspruch 1,
**dadurch gekennzeichnet,**
**dass** eine Ausfahrsteuerung für den Schiebetritt (4) vorgesehen ist, die derart ausgelegt ist, dass er zwei Endlagen anfahren kann.

3. Schienenfahrzeug nach einem der Ansprüche 1 bis 2,
**dadurch gekennzeichnet,**
**dass** der Schiebetritt (4) über eine Spindel angetrieben ist.

4. Schienenfahrzeug nach einem der Ansprüche 1 bis 3,
**dadurch gekennzeichnet,**
**dass** die Schiebetrittkassette (3) in dem Einstiegsbereich schräg gelagert ist, wobei deren äußeres Ende höher als deren inneres Ende liegt.

5. Schienenfahrzeug nach einem der Ansprüche 1 bis 4,
**dadurch gekennzeichnet,**
**dass** die Schiebetrittkassette (3) auf einem dickwandigen Stahlprofil (11) abgestützt ist, das zu beiden Seiten des Einstiegsbereiches über Stahlgussteile (12) an Langträgerprofilen (13) eines Wagenkastenuntergestells angebracht ist.

6. Schienenfahrzeug nach Anspruch 5,
**dadurch gekennzeichnet,**
**dass** das dickwandige Stahlprofil (11) in seiner Höhe gegenüber dem Langträgerprofil (13) derart vermindert ist, dass eine Oberfläche der Schiebetrittkassette (3) im Wesentlichen mit einer Fußbodenoberkante abschließt.

7. Schienenfahrzeug nach einem der Ansprüche 5 oder 6,
**dadurch gekennzeichnet,**
**dass** der Schiebetritt (4) von einem begehbaren Wartungsdeckel (10) bedeckt und frei von über ihm angeordneten festen und tragenden Wagenkastenrohbauteilen ist.

8. Schienenfahrzeug nach einem der Ansprüche 5 bis 7,
**dadurch gekennzeichnet,**
**dass** ein Verstärkungsgerippe (16) vorgesehen ist, das von dem dickwandigen Stahlprofil (11) aus horizontal nach innen verläuft und am Wagenkastenuntergestell angebracht ist.

9. Schiebetrittkassette (3) mit einem darin angeordneten und geführten Schiebetritt (4),
**dadurch gekennzeichnet,**
**dass** der Schiebetritt (4) derart geführt ist, dass er beim Ausfahren aus der Schiebetrittkassette (3) eine parabelförmige Bewegung aus der Kassettenebene heraus nach unten ausführt, und der Schiebetritt (4) über zwei in der Schiebetrittkassette (3) in parabelförmige Führungen (8, 9) eingreifende, parabelförmige Arme (6, 7) ausfahrbar gelagert ist.

10. Schiebetrittkassette (3) nach Anspruch 9,
**dadurch gekennzeichnet,**
**dass** eine Ausfahrsteuerung für den Schiebetritt (4) vorgesehen ist, die derart ausgelegt ist, dass er zwei Endlagen anfahren kann.

11. Schiebetrittkassette (3) nach einem der Ansprüche 9 bis 10,
**dadurch gekennzeichnet,**
**dass** der Schiebetritt (4) über eine Spindel angetrieben ist.

## Claims

1. Rail vehicle with at least one entry region which is designed, in terms of its bodyshell structure, to receive a sliding footstep (4), arranged and guided in a sliding footstep casing (3), in the edge of the vehicle floor,
**characterized**
**in that** the sliding footstep (4) is guided in such a way that during the extension movement out of the sliding footstep casing (3) the sliding footstep (4) carries out a parabolic downward movement out of the plane of the casing, and the sliding footstep (4) is mounted in such a way that it can be extended by means of two parabolic arms (6, 7) which engage in parabolic guides (8, 9) in the sliding footstep casing (3).

2. Rail vehicle according to Claim 1,
**characterized**
**in that** an extension control means for the sliding footstep (4) is provided which is configured in such a way that it can move into two end positions.

3. Rail vehicle according to one of Claims 1 to 2,
**characterized**
**in that** the sliding footstep (4) is driven by means of a spindle.

4. Rail vehicle according to one of Claims 1 to 3,
**characterized**
**in that** the sliding footstep casing (3) is obliquely mounted in the entry region, wherein the outer end of said sliding footstep casing (3) is higher than its inner end.

5. Rail vehicle according to one of Claims 1 to 4,
**characterized**
**in that** the sliding footstep casing (3) is supported on a thick-walled steel profile (11) which is attached on both sides of the entry region to longitudinal carrier profiles (13) of a wagon body undercarriage by means of cast steel parts (12).

6. Rail vehicle according to Claim 5,
**characterized**
**in that** the thick-walled steel profile (11) is reduced in its height with respect to the longitudinal carrier profile (13) in such a way that a surface of the sliding footstep casing (3) terminates essentially flush with an upper end of the floor.

7. Rail vehicle according to one of Claims 5 or 6,
**characterized**
**in that** the sliding footstep (4) is covered by a maintenance cover (10) which can be walked on, and is free of fixed and load-bearing wagon body bodyshell parts which are arranged via it.

8. Rail vehicle according to one of Claims 5 to 7,
**characterized**
**in that** a reinforcement rib (16) is provided which extends horizontally inward from the thick-walled steel profile (11) and is attached to the wagon body undercarriage.

9. Sliding footstep casing (3) having a sliding footstep (4) which is arranged and guided therein,
**characterized**
**in that** the sliding footstep (4) is guided in such a way that during the extension movement out of the sliding footstep casing (3) said sliding footstep (4) carries out a downward parabolic movement out of the plane of the casing, and the sliding footstep (4) is mounted in such a way that it can be extended by means of two parabolic arms (6, 7) which are engaged in parabolic guides (8, 9) in the sliding footstep casing (3).

10. Sliding footstep casing (3) according to Claim 9,
**characterized**
**in that** an extension control means for the sliding footstep (4) is provided, which is configured in such a way that it can move into two end positions.

11. Sliding footstep casing (3) according to one of Claims 9 to 10,
**characterized**
**in that** the sliding footstep (4) is driven by means of a spindle.

## Revendications

1. Véhicule ferroviaire ayant au moins une zone d'accès, qui, du point de vue de sa construction de coque, est constituée dans le bord du plancher du véhicule pour loger un marchepied ( 4 ) coulissant disposé et guidé dans un boîtier ( 3 ) de marchepied,
**caractérisé**
**en ce que** le marchepied ( 4 ) coulissant est réalisé de manière à exécuter, vers le bas, hors du plan du boîtier, en sortant du boîtier ( 3 ) du marchepied coulissant, un mouvement parabolique et le marchepied ( 4 ) coulissant est monté de manière à pouvoir être déployé par deux bras ( 6, 7 ) paraboliques pénétrant dans des guidages ( 8, 9 ) paraboliques dans le boîtier ( 3 ) du marchepied coulissant.

2. Véhicule ferroviaire suivant la revendication 1,
**caractérisé**
**en ce qu'**il est prévu une commande de déploiement du marchepied ( 4 ) coulissant, qui est conçue de manière à ce qu'elle puisse aller vers deux positions d'extrémité.

3. Véhicule ferroviaire suivant l'une des revendications 1 à 2,
**caractérisé**
**en ce que** le marchepied ( 4 ) coulissant est entraîné par une broche.

4. Véhicule ferroviaire suivant l'une des revendications 1 à 3,
**caractérisé**
**en ce que** le boîtier ( 3 ) du marchepied coulissant est, dans la zone d'accès, monté incliné, son extrémité extérieure étant plus haute que son extrémité intérieure.

5. Véhicule ferroviaire suivant l'une des revendications 1 à 4,
**caractérisé**
**en ce que** le boîtier ( 3 ) du marchepied coulissant est appuyé sur un profilé ( 11 ) en acier à paroi épaisse, qui est mis des deux côtés de la zone d'accès par des pièces ( 12 ) en acier moulé sur des profilés ( 13 ) de longeron d'un châssis de caisse.

6. Véhicule ferroviaire suivant la revendication 5,
**caractérisé**
**en ce que** la hauteur du profilé ( 11 ) en acier à paroi épaisse est diminuée par rapport à celle du profilé ( 13 ) formant longeron de manière à ce qu'une surface du boîtier ( 3 ) du marchepied coulissant se termine sensiblement avec un bord supérieur du plancher.

7. Véhicule ferroviaire suivant l'une des revendications 5 ou 6,
**caractérisé**
**en ce que** le marchepied ( 4 ) coulissant est recouvert d'un couvercle ( 10 ) d'entretien, sur lequel on peut marcher, et est exempt de composant de caisse fixe et porteur disposé sur lui.

8. Véhicule ferroviaire suivant l'une des revendications 5 à 7,
**caractérisé**
**en ce qu'**il est prévu une nervure ( 16 ) de renfort, qui s'étend horizontalement vers l'intérieur à partir du profilé ( 11 ) en acier à paroi épaisse et qui est mise sur le châssis de caisse.

9. Boîtier (3) de marchepied ayant un marchepied (4) qui est disposé et guidé,
**caractérisé en ce que** le marchepied (4) est guidé de manière à exécuter, lors de la sortie du boîtier (3) de marchepied, un mouvement parabolique vers le bas hors du plan du boîtier, et le marchepied (4) est monté de manière à pouvoir être déployé par deux bras (6, 7) paraboliques pénétrant dans des guidages (8, 9) paraboliques.

10. Boîtier (3) de marchepied suivant la revendication 9,
**caractérisé**
**en ce qu'**il est prévu une commande de déploiement du marchepied (4), qui est conçue de manière à pouvoir arriver à deux positions d'extrémité.

11. Boîtier (3) suivant l'une des revendications 9 à 10,
**caractérisé**
**en ce que** le marchepied (4) est entraîné par une broche.
